# EUROPEAN PATENT SPECIFICATION

(11) **EP 2 898 560 B1**
(45) Date of publication and mention of the grant of the patent: **22.04.2020**
(21) Application number: 13838378.1
(22) Date of filing: 17.09.2013
(51) Int. Cl.: H01M 8/04955, H01M 8/2465, H01M 8/04664, H01M 8/04223, H01M 8/124

(54) **SYSTEMS AND METHODS FOR BYPASSING FUEL CELLS**
SYSTEME UND VERFAHREN ZUR UMGEHUNG VON BRENNSTOFFZELLEN
SYSTÈMES ET PROCÉDÉS POUR CONTOURNER DES PILES À COMBUSTIBLE

(30) Priority: 21.09.2012 US 201261703832 P
(43) Date of publication of application: 29.07.2015
(73) Proprietor: Bloom Energy Corporation, Sunnyvale, CA 94089-1137 (US)
(72) Inventor: FISHER, John, Sunnyvale, California 94089-1137 (US); RUSSELL, Ian, Sunnyvale, California 94089 (US); WALTH, Gary, Sunnyvale, California 94089 (US); PERRY, Martin, Sunnyvale, California 94089 (US); EDMONSTON, David, Sunnyvale, California 94089 (US); KALIKA, Vlad, Sunnyvale, California 94089 (US)
(74) Representative: Wichmann, Hendrik
(86) International application number: PCT/US2013/060145
(87) International publication number: WO 2014/047059

(56) References cited:
- EP-A2- 1 517 393
- WO-A2-2012/170844
- DE-C1- 19 746 616
- JP-A- S63 226 884
- JP-A- 2003 109 651
- JP-A- 2008 243 751
- US-A- 5 804 328
- US-A1- 2005 064 254
- US-A1- 2006 246 331
- US-A1- 2008 220 294
- US-A1- 2010 035 092
- US-A1- 2011 008 687

## Description

### BACKGROUND

Fuel cells are electrochemical devices which can convert energy stored in fuels to electrical energy with high efficiencies. High temperature fuel cells include solid oxide and molten carbonate fuel cells. These fuel cells may operate using hydrogen and/or hydrocarbon fuels. There are classes of fuel cells, such as the solid oxide reversible fuel cells, that also allow reversed operation, such that water or other oxidized fuel can be reduced to unoxidized fuel using electrical energy as an input.

In a high temperature fuel cell system, such as a solid oxide fuel cell (SOFC) system, an oxidizing flow is passed through the cathode side of the fuel cell while a fuel flow is passed through the anode side of the fuel cell. The oxidizing flow is typically air, while the fuel flow is typically a hydrogen-rich gas created by reforming a hydrocarbon fuel source. The fuel cell, operating at a typical temperature between 750°C and 950°C, enables the transport of negatively charged oxygen ions from the cathode flow stream to the anode flow stream, where the ion combines with either free hydrogen or hydrogen in a hydrocarbon molecule to form water vapor and/or with carbon monoxide to form carbon dioxide. The excess electrons from the negatively charged ion are routed back to the cathode side of the fuel cell through an electrical circuit completed between anode and cathode, resulting in an electrical current flow through the circuit.

Fuel cell stacks may be either internally or externally manifolded for fuel and air. In internally manifolded stacks, the fuel and air is distributed to each cell using risers contained within the stack. In other words, the gas flows through openings or holes in the supporting layer of each fuel cell, such as the electrolyte layer, and gas separator of each cell. In externally manifolded stacks, the stack is open on the fuel and air inlet and outlet sides, and the fuel and air are introduced and collected independently of the stack hardware. For example, the inlet and outlet fuel and air flow in separate channels between the stack and the manifold housing in which the stack is located.

Fuel cell stacks are frequently built from a multiplicity of cells in the form of planar elements, tubes, or other geometries. Fuel and air has to be provided to the electrochemically active surface, which can be large. One component of a fuel cell stack is the so called gas flow separator (referred to as a gas flow separator plate in a planar stack) that separates the individual cells in the stack. The gas flow separator plate separates fuel, such as hydrogen or a hydrocarbon fuel, flowing to the fuel electrode (i.e., anode) of one cell in the stack from oxidant, such as air, flowing to the air electrode (i.e., cathode) of an adjacent cell in the stack. Frequently, the gas flow separator plate is also used as an interconnect which electrically connects the fuel electrode of one cell to the air electrode of the adjacent cell. In this case, the gas flow separator plate which functions as an interconnect is made of or contains an electrically conductive material.

When a fuel cell fails, it becomes highly resistive. In the case of a SOFC stack, operation of the stack may continue, but the voltage of the stack is increasingly consumed by the voltage drop across the resistive interface formed by the failed cell. Bypass diodes have been used in fuel cell systems to allow current to bypass the defective fuel cell, but these diodes often suffer chemical and thermal degradation inside the hot box portion of the system that operates at a temperature greater than about 600°C.

JPS63226884 discloses a fuel cell in which cells are sandwiched between a cathode and an anode and an oxidizing gas is supplied to the cathode side and a fuel gas is supplied to the anode side to generate electric power, wherein an instrumentation terminal plate projects from an end portion of each of the separators of the respective stages and the upper and lower instrumentation terminal plates are joined to form a bypass line.

JP,2003-109651,A discloses a generating cell which placed a fuel electrode layer and an air electrode layer at both sides of a solid electrolyte layer, wherein a fuel electrode collector is arranged on the outside of the aforementioned fuel electrode layer, and an air pole charge collector is arranged on the outside of the aforementioned air electrode layer. Further disclosed is a repair method for short-circuiting a separator of damaged generating cell both sides electrically by a conductive member when damage arises in the aforementioned generating cell.

### SUMMARY

The various embodiments provide solid oxide fuel cell stack devices and methods for bypassing fuel cells in a solid oxide fuel cell stack as defined in the claims. Embodiment methods for bypassing a fuel cell in a fuel cell stack include identifying a fuel cell to bypass and connecting a conductive bypass, by welding a jumper to a side of the fuel cell stack such that the jumper is configured to electrically bypass the identified fuel cell.

### BRIEF DESCRIPTION OF THE DRAWINGS

The accompanying drawings, which are incorporated herein and constitute part of this specification, illustrate example embodiments of the invention, and together with the general description given above and the detailed description given below, serve to explain the features of the invention.
FIG. 1 illustrates a side cross-sectional view of a SOFC stack.
FIG. 2A illustrates a perspective cross-sectional view of a fuel cell stack with jumpers.
FIG. 2B illustrates a perspective cross-sectional view of a fuel cell stack with extended jumpers.
FIG. 3 is a flow diagram of an embodiment method for attaching a jumper to a fuel cell stack.
FIG. 4 illustrates a perspective cross-sectional view of a fuel cell stack with sealed cathode gas flow passages.
FIG. 5 is a flow diagram of an embodiment method for sealing gas flow passages and attaching a jumper to a fuel cell stack.
FIG. 6 illustrates a front cross-sectional view of a fuel cell stack with conductive sealing material applied to seal cathode gas flow passages and bypass a fuel cell.
FIG. 7A illustrates a perspective front view of an embodiment column of fuel cell stacks configured with jumpers connected to end plates of non-adjacent fuel cell stacks.
FIG. 7B illustrates a side view of an embodiment column of fuel cell stacks configured with jumpers connected to two fuel distribution manifolds.
FIG. 8 is a flow diagram of an embodiment method for applying conductive sealing material to a fuel cell stack.

### DETAILED DESCRIPTION

The invention refers to a method for bypassing a fuel cell in a solid oxide fuel cell stack, comprising: identifying a defective fuel cell to bypass; and welding on a side of the stack a conductive jumper to the fuel cell stack such that the jumper electrically connects a first interconnect in the fuel cell stack and a second interconnect in the fuel cell stack and electrically bypasses the identified defective fuel cell, wherein the jumper comprises a strip of metal that electrically connects the first and second interconnects and does not comprise a diode. The invention further refers to a solid oxide fuel cell stack device comprising: a plurality of fuel cells and a plurality of interconnects, wherein: at least one of the plurality of fuel cells comprises a defective fuel cell located between a first interconnect and a second interconnect; a jumper welded on a side of the stack and to the first and the second interconnects disposed on opposing sides of the defective fuel cell, such that the jumper electrically connects the first interconnect and the second interconnect and electrically bypasses the defective fuel cell, wherein, no jumpers are connected to the stack between each two adjacent interconnects of the plurality of the interconnects that are separated by a non-defective fuel cell of the plurality of the fuel cells, and the jumper comprises a strip of metal that electrically connects the first and second interconnects and does not comprise a diode.

The various embodiments will be described in detail with reference to the accompanying drawings. Wherever possible, the same reference numbers will be used throughout the drawings to refer to the same or like parts. References made to particular examples are for illustrative purposes, and are not intended to limit the scope of the invention or the claims.

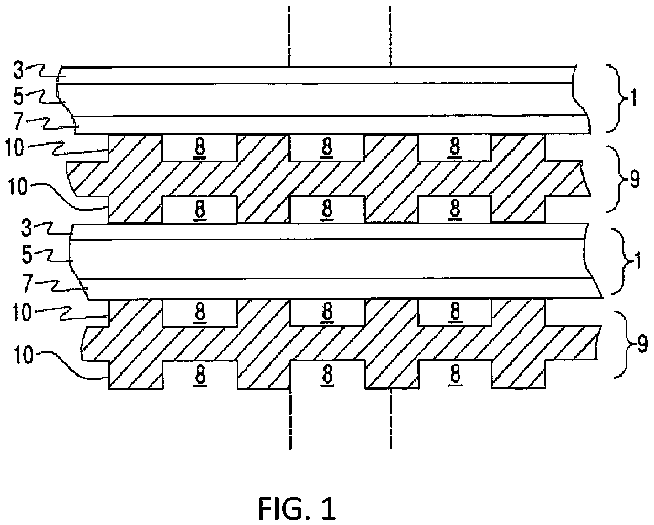

FIG. 1 illustrates a solid oxide fuel cell (SOFC) stack in which each SOFC 1 comprises a cathode electrode 3 (e.g., LSM or other conductive perovskites), a solid oxide electrolyte 5 (e.g., YSZ, ScSZ, or doped ceria), and an anode electrode 7 (e.g., a cermet such as a nickel-stabilized zirconia and/or doped ceria cermet).

Various materials may be used for the cathode electrode 3, electrolyte 5, and anode electrode 7. For example, the anode electrode may comprise a cermet comprising a nickel containing phase and a ceramic phase. The nickel containing phase may consist entirely of nickel in a reduced state. This phase may form nickel oxide when it is in an oxidized state. Thus, the anode electrode is preferably annealed in a reducing atmosphere prior to operation to reduce the nickel oxide to nickel. The nickel containing phase may include other metals in additional to nickel and/or nickel alloys. The ceramic phase may comprise a stabilized zirconia, such as yttria and/or scandia stabilized zirconia and/or a doped ceria, such as gadolinia, yttria and/or samaria doped ceria.

The electrolyte may comprise a stabilized zirconia, such as scandia stabilized zirconia (SSZ) or yttria stabilized zirconia (YSZ). Alternatively, the electrolyte may comprise another ionically conductive material, such as a doped ceria.

The cathode electrode may comprise an electrically conductive material, such as an electrically conductive perovskite material, such as lanthanum strontium manganite (LSM). Other conductive perovskites, such as LSCo, etc., or metals, such as Pt, may also be used. The cathode electrode may also contain a ceramic phase similar to the anode electrode. The electrodes and the electrolyte may each comprise one or more sublayers of one or more of the above described materials.

Fuel cell stacks are frequently built from a multiplicity of SOFC's 1 in the form of planar elements, tubes, or other geometries. Although the fuel cell stack in FIG. 1 is vertically oriented, fuel cell stacks may be oriented horizontally or in any other direction. Fuel and air may be provided to the electrochemically active surface, which can be large.

The gas flow separator 9 (referred to as a gas flow separator plate when part of a planar stack), containing gas flow passages or channels 8 between ribs 10, separates the individual cells in the stack. The gas flow separator plate separates fuel, such as a hydrocarbon fuel, flowing to the fuel electrode (i.e. anode 7) of one cell in the stack from oxidant, such as air, flowing to the air electrode (i.e. cathode 3) of an adjacent cell in the stack. At either end of the stack, there may be an air end plate or fuel end plate (not shown) for providing air or fuel, respectively, to the end electrode.

Frequently, the gas flow separator plate 9 is also used as an interconnect which electrically connects the anode or fuel electrode 7 of one cell to the cathode or air electrode 3 of the adjacent cell. In this case, the gas flow separator plate which functions as an interconnect is made of or contains electrically conductive material. FIG. 1 shows that the lower SOFC 1 is located between two interconnects 9.

Interconnects may be made of or may contain electrically conductive material, such as a metal alloy (e.g., chromium-iron alloy) or an electrically conductive ceramic material, which optionally has a similar coefficient of thermal expansion to that of the solid oxide electrolyte in the cells (e.g., a difference of 0-10%). An electrically conductive contact layer, such as a nickel contact layer, may be provided between the anode electrode and the interconnect. Another optional electrically conductive contact layer may be provided between the cathode electrode and the interconnect.

The plurality of fuel cells in a fuel cell stack may share a common fuel inlet and exhaust passages or risers. A fuel cell stack may include a distinct electrical entity which contains two end plates on opposite ends of the stack which are connected to power conditioning equipment and the power (i.e., electricity) output of the stack. Thus, in some configurations, the electrical power output from such a distinct electrical entity may be controlled separately from other stacks. In other embodiments, multiple stacks may share the same end plates. In this case, the stacks may jointly comprise a distinct electrical entity.

A fuel cell stack may be part of a larger fuel cell system for generating power. The fuel cell stack may be located in a hot zone within such a system. During normal operation, this hot zone may operate at a high temperature, such as a temperature of about 600°C or more, e.g., 600-1000°C, such as 750-950°C.

Fuel cells typically act as voltage sources in the system. However, fuel cells may have failure modes wherein the fuel cell becomes a defective cell and a resistive parasitic load. For example, failure of a fuel cell may occur if the fuel cell becomes cracked or otherwise damaged. Failed or underperforming fuel cells may be bypassed to avoid voltage losses. The various embodiments provide systems and methods for bypassing defective fuel cells in a fuel cell stack.

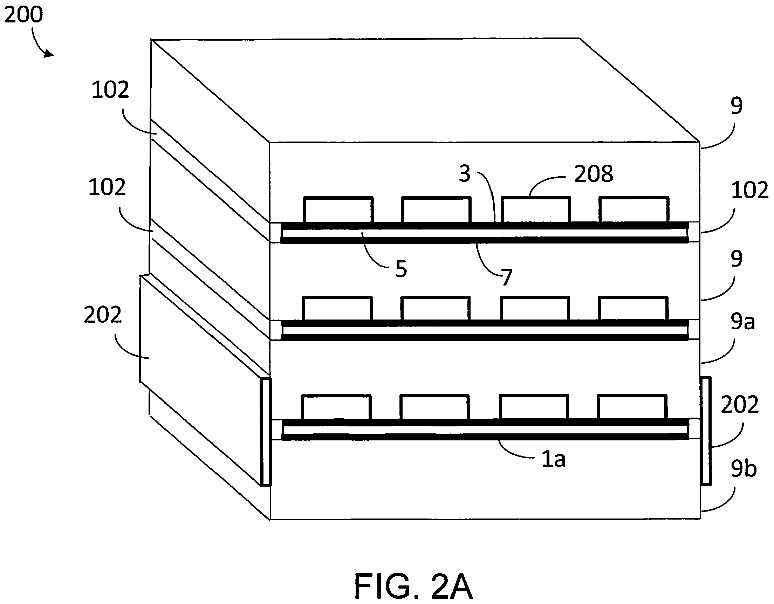

FIG. 2A illustrates a cross sectional view of a fuel cell stack 200 with a defective fuel cell 1a bypassed according to an embodiment. The fuel cell stack 200 includes fuel cells 1 comprising cathode electrodes 3, electrolytes 5, and anode electrodes 7. The fuel cells 1 are connected in series by interconnects 9. An electrically insulating seal 102 may surround the fuel cell 1 on plural sides between the interconnects 9.

The interconnects 9 may include cathode gas flow passages 208 that may provide air to corresponding cathode electrodes 3. FIG. 2A illustrates a cross sectional such that the cathode flow passages 208 may be seen above the fuel cells 1. Anode flow passages are not shown in FIG. 2A, but may run on opposite side of each interconnect adjacent to the anode electrode 7 and parallel (or perpendicular in alternative embodiment) to the cathode gas flow passages 208. The anode flow passages may be internally manifolded such that the anode flow passages do not extend through to the side of the stack 200 while the air passages may be externally manifolded.

Jumpers 202 are attached to the fuel cell stack 200 to bypass a defective fuel cell 1. As shown in FIG. 2A, the jumpers 202 may be attached to interconnects 9a and 9b on either side of the fuel cell 1a. Jumpers 202 are attached by welding, or spot welding for electrically connecting the jumpers 202 to the interconnects 9. However, there are no jumpers (or other bypass conductors) positioned adjacent to non-defective cells in the stack, such that interconnects that sandwich a non-defective cell are not connected by a jumper or another bypass conductor.

The jumper 202 may provide an alternate low resistance path for current and thereby bypass the fuel cell 1a between the interconnects 9a, 9b to which the jumper 202 is attached. Current would normally travel through fuel cells 1 and interconnects 9 in series. However, a jumper 202 electrically connected to two interconnects 9a, 9b places the jumper 202 in parallel with the fuel cell la between the two interconnects 9a, 9b. If the fuel cell 1a is a failed or underperforming fuel cell that is acting as a resistive parasitic load, current may travel through the low resistance jumper 202 instead of the fuel cell la and thereby avoid voltage losses.

Fuel cell stacks may be modified with multiple jumpers 202. FIG. 2A illustrates two jumpers 202 on opposite sides of the fuel cell stack 200 to bypass the same fuel cell 1a. Alternate embodiments may use one or more jumpers 202 to bypass a fuel cell 1. In further embodiments, a fuel cell stack may have multiple jumpers 202 attached in order to bypass more than one fuel cell.

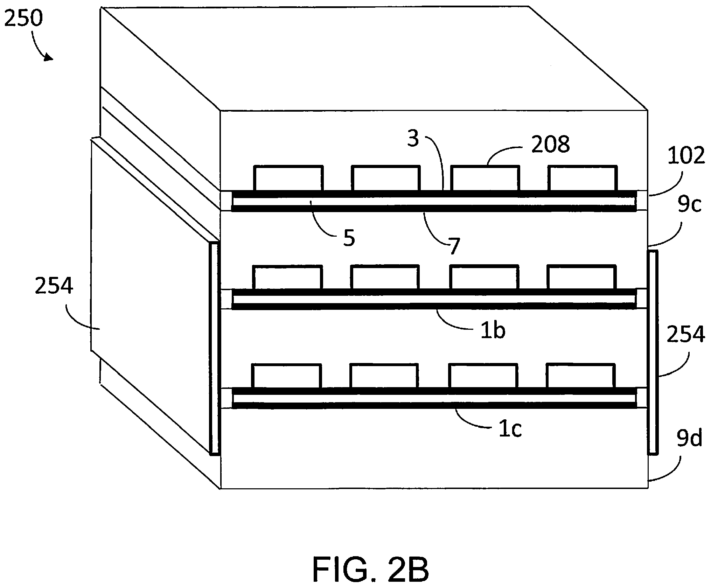

In alternate embodiments, multiple fuel cells may be bypassed by a single jumper. FIG. 2B illustrates a fuel cell stack 250 with extended jumpers 254. Extended jumpers 254 may electrically connect nonadjacent interconnects 9c, 9d and thereby bypass fuel cells 1b and 1c in between the nonadjacent interconnects 9c, 9d.

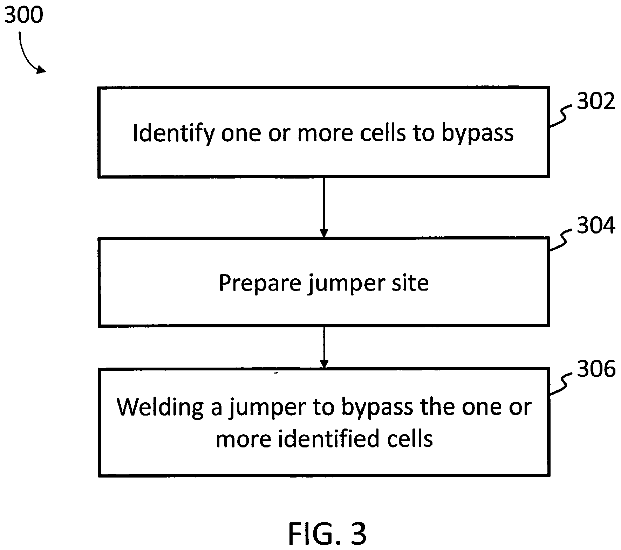

FIG. 3 illustrates an embodiment method 300 for bypassing a fuel cell in a fuel cell stack. One or more fuel cells in the fuel cell stack may be identified to be bypassed in step 302. For example, a fuel cell 1 that had failed or was underperforming (e.g., the fuel cell was not producing enough power, had cracked, or was not meeting any other standard) or was suspected of failing or underperforming could be identified as defective and to be bypassed. Fuel cells and fuel cell stacks may be monitored with a variety of sensor devices, such as voltage, current or pressure probes, to determine if a fuel cell was failing or underperformed.

A connection site for a jumper may be prepared in step 304. This step may be optional if the fuel cell stack does not need preparation. If the fuel cell stack does need preparation, a jumper connection site may be prepared, such as by removing material or coating (e.g., perovskite coating) from interconnects 9 on the side of the stack. For example, platinum, nickel, Inconel, or lanthanum strontium manganite (LSM) may be removed from the side of the fuel cell stack. Material or coating, such a perovskite coating, may be removed using a gas laser, such as a CO₂ laser in the 10,000 nm peak wavelength range using a laser ablation process. Removing material may provide better contact between the interconnects 9 and the jumper 202, 254 and facilitate welding or spot welding the jumper 202, 254 to bare metal base material.

A jumper is welded to the fuel cell stack in step 306. The jumper 202, 254 may be welded to two interconnects 9, such as shown in FIG. 2A, and thereby electrically bypass a fuel cell 1 identified in step 302. In further embodiments, welding the jumper 202, 254 comprises spot welding the jumper 202, 254 to a first interconnect and a second interconnect of the fuel cell stack. In some embodiments, welding the jumper 202, 254 may comprise laser welding the jumper to a first interconnect and a second interconnect of the fuel cell stack. For example, the jumper may be welded to the interconnects with a YbAG, NdAG, or YAG laser.

In various embodiments, jumpers may vary in composition. According to the invention, the jumper comprises a strip of metal. The jumper's material may be selected to match the coefficient of thermal expansion of other portions of the fuel cell stack to prevent uneven expansion and breakage during operation. The jumper may also vary in size and shape, such as being attached to multiple sides of the fuel cell stack or being attached to multiple interconnects. In further embodiments, the jumper may be configured to electrically bypass multiple fuel cells.

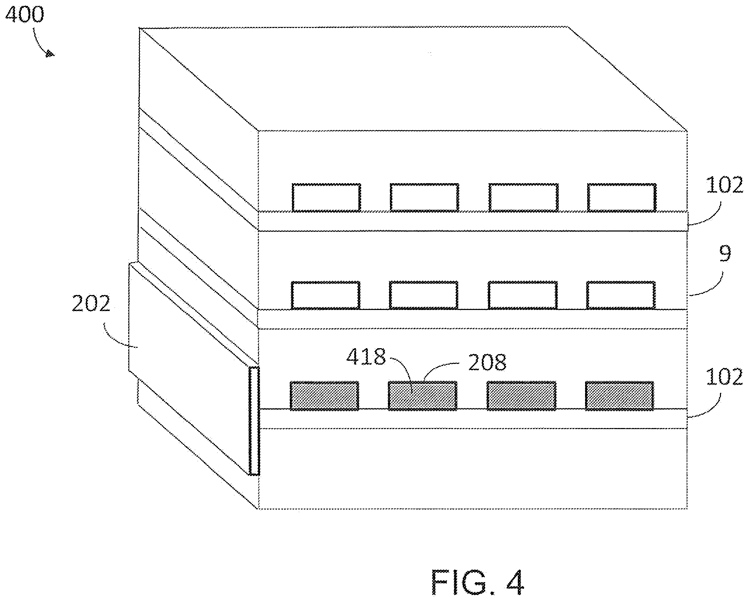

Further embodiments may include sealing a cathode inlet and/or outlet of the identified fuel cell with a sealing material. FIG. 4 illustrates a fuel cell stack 400 with fuel cells 1 comprising cathode electrodes 3, electrolytes 5, and anode electrodes 7. The fuel cells 1 are connected in series by interconnects 9 with cathode gas flow passages 208 that may provide air to corresponding cathode electrodes 3. FIG. 4 present a front perspective view rather than a cross sectional view like FIGS. 2A and 2B so the insulating seal 102 surrounding the fuel cell 1 may be visible on all sides. The cathode gas flow passages 208 may extend through the front on the stack, such as if the cathode gas flow passages 208 are externally manifolded. The cathode gas flow passages 208 corresponding to fuel cell 1 to be bypassed may be sealed with sealing material 418.

In various embodiments, the sealing material 418 may comprise different materials, such as a glass or composite metal mixtures. For example, the sealing material 418 may comprise lanthanum-strontium-manganate, manganese-cobalt mixtures, or alumina paste compositions. The sealing material may be selected to match the coefficient of thermal expansion of other portions of the fuel cell stack to prevent uneven expansion and breakage during operation.

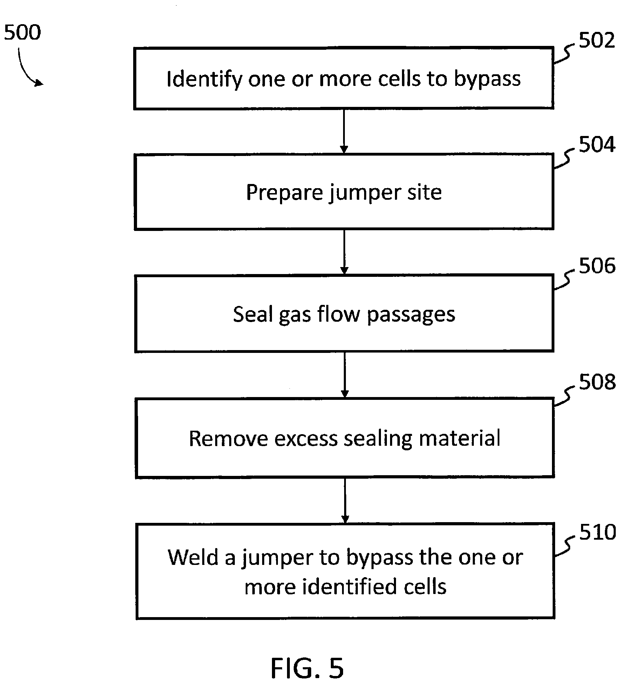

FIG. 5 illustrates an embodiment method 500 for sealing gas flow passages 208 and bypassing a fuel cell in a fuel cell stack. One or more fuel cells in the fuel cell stack may be identified to be bypassed in step 502. Defective fuel cells may act as large voltage drops, and therefore it may be advantageous to identify and bypass defective fuel cells. For example, a fuel cell that had failed or was underperforming (e.g., the fuel cell was not producing enough voltage, had cracked, or was not meeting any other standard) or was suspected of failing or underperforming could be identified to be bypassed. Fuel cells and fuel cell stacks may be monitored with a variety of sensor devices, such as voltage or pressure probes, to determine if a fuel cell was failing or underperformed.

A connection site for a jumper may be prepared in step 504. This step may be optional if the fuel cell stack does not need preparation. If the fuel cell stack does need preparation, a jumper connection site may be prepared, such as by removing material from the side of the stack. For example, platinum, nickel, Inconel, or lanthanum strontium manganite (LSM) may be removed from the side of the fuel cell stack. Removing material may provide better contact between the interconnects 9 and the jumper 202 and facilitate welding or spot welding the jumper to bare metal base material. Preparation in step 504 may also be necessary or facilitate reaching cathode gas flow passages 208.

The cathode gas flow passages 208 may be sealed in step 506. For example, sealing material 418 may be applied to the inlets and/or outlets of the cathode gas flow passages 208 corresponding with the fuel cell identified in step 502. In optional step 508, any excess sealing material from step 506 may be removed and the site may be prepared again for a jumper 202.

In step 510, a jumper 202 is welded, such as spot welded, to the fuel cell stack. The jumper 202 may be welded to two interconnects 9, such as shown in FIG. 4, and thereby electrically bypass the fuel cell 1 identified in step 502. In alternate embodiments, anode inlets and/or outlets may be sealed, or both anode and cathode inlets and/or outlets may be sealed.

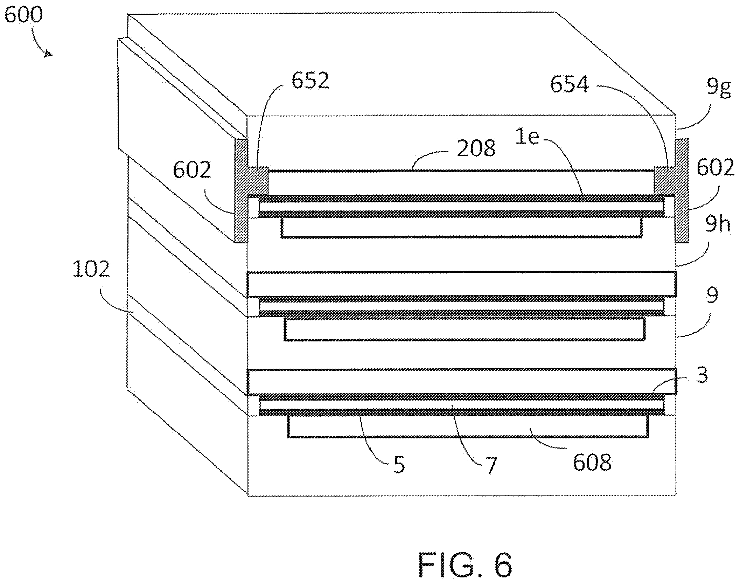

Further embodiments may seal cathode inlets and/or outlets and bypass a fuel cell with the same structure. FIG. 6 illustrates a perspective cross sectional view of a fuel cell stack 600 with fuel cells 1 comprising cathode electrodes 3, electrolytes 5, and anode electrodes 7. The fuel cell stack 600 is shown from a different angle than in FIGS. 2A, 2B, and 4. Instead, the cathode gas flow passages 208 run left to right and the anode gas flow passages 608 may be seen in the cross sectional view. The fuel cells 1 are connected in series by interconnects 9 with cathode gas flow passages 208 that may provide air to corresponding cathode electrodes 3. Sealing jumpers 602 may seal cathode inlets 652 and outlets 654 and also electrically connect interconnects 9g, 9h thereby bypassing fuel cell 1e.

Systems according to further embodiments may include one or more columns, each of which may contain a plurality of fuel cell stacks (e.g., SOFC stacks). In various embodiments, a fuel cell stack column may be modified with low resistance jumpers that are configured to bypass one or more entire fuel cell stack(s) in the column. Structures that may be electrically connected by such jumpers to avoid the one or more fuel cell stack(s) may vary based on the configuration of the column.

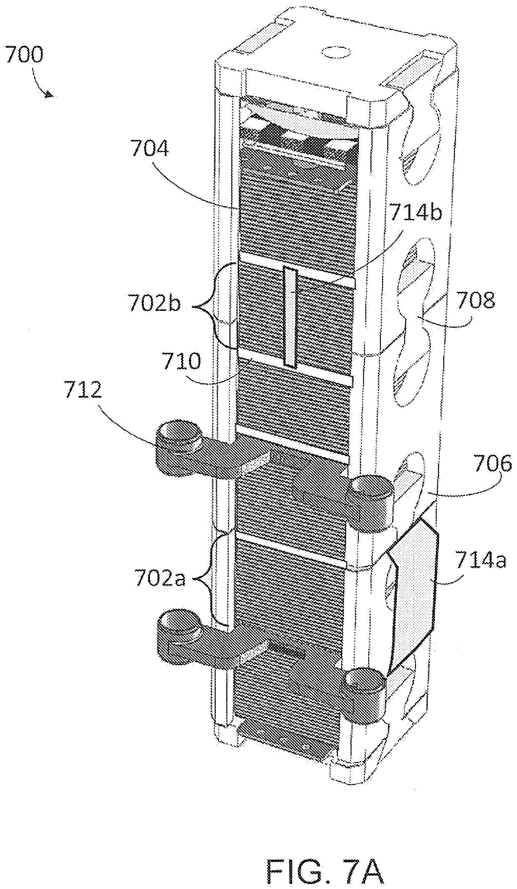

FIG. 7A illustrates an example column 700 that contains a plurality of fuel cell stacks, such as stacks 702a, 702b, each of which may comprise a plurality of fuel cells 704 (e.g., twenty-five fuel cells). In this system, one or more ceramic side baffles 706 may be positioned on opposite sides of column 700 in order to direct the cathode feed into the cathode flow paths, to fill space between adjacent stacks, and to place a compressive load on the fuel cell stacks 702. The side baffles 706 may also electrically isolate the fuel cell stacks in column 700 from metal components in the system. The load on the fuel cell stacks may be provided from any one or more load sources, such as the base of the system, a block underneath the column, and/or a spring assembly above the column.

Also in column 700, ceramic side baffles 706 may be constructed from one or more interlocking baffle plates, which may be made from materials such as alumina or an alumina fiber/alumina matrix CMC. In some embodiments, plate-shaped ceramic inserts 708 may connect baffle plate(s) to the block underneath the column, and/or the spring assembly above the column and/or to each other (if there are plural plates) to form the side baffles 706. The inserts 708 may fit into corresponding circular or quasi-circular cutouts in the baffle plates to increase the overall strength of the baffles 706 and/or reduce stress at the contact points between the baffle plates. In some embodiments, the inserts 708 may be made of an insulator material.

The fuel cell stacks 702 in column 700, for example, stacks 702a, 702b, may each contain conductive end plates 710 which function to connect the stacks 702 in series (e.g., the end plate of one stack is connected electrically to an end plate of the next stack, or one end plate is shared between adjacent stacks). Further, one or more fuel distribution manifolds 712 may be provided between adjacent fuel cell stacks. End plates can be electrically connected to one another either directly, by being placed in physical contact, or indirectly, such as through an electrically conductive fuel manifold located between the end plates.

In an embodiment, a jumper 714a may be formed on one side of the column 700, such as between the baffle plates that form a side baffle 706 to bypass the defective stack and is present in addition to a jumper for bypassing a defective fuel cell as defined in the claims. In another embodiment, two jumpers 714a may be formed between baffle plates that form side baffles 706 on opposite sides of the column 700. In this manner, at least one jumper 714a electrically connects the end plates of non-adjacent fuel cell stacks to bypass fuel cell stack 702a. In another embodiment, at least one jumper 714b may be formed in the front and/or back of column 700 to connect the exposed edges of the end plates of the fuel cell stacks located above and below fuel one or more defective cell stack(s) 702b.

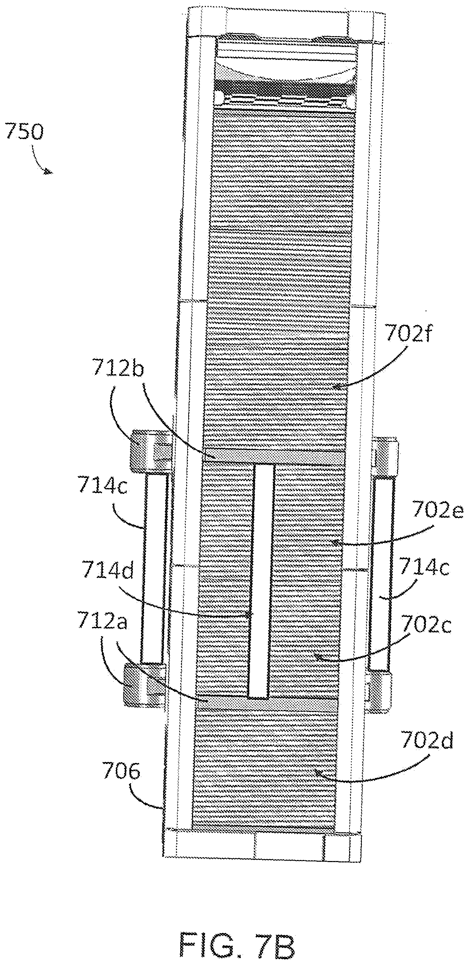

FIG. 7B illustrates another example column 750 in a fuel cell system. Similar to column 700, column 750 may contain a plurality of fuel cell stacks (e.g., stacks 702c - 702f), each of which may contain a plurality of fuel cells (e.g., 10-100, such as 25-50 fuel cells per stack). In an embodiment, one or more jumpers may be formed by electrically connecting fuel distribution manifolds 712a, 712b that exist in the column between different pairs of adjacent stacks. For example, one or more defective fuel cell stacks, such as two or more underperforming or failing adjacent fuel cell stacks, such as stacks 702c, 702e, may be bypassed by connecting a jumper between fuel distribution manifold 712a (i.e., between the bottom underperforming stack 702c and adjacent stack 702d) and fuel distribution manifold 712b (i.e., between the top underperforming stack 702e and adjacent stack 702f) wherein said jumper is present in addition to a jumper for bypassing a defective fuel cell as defined in the claims. In an embodiment, fuel distribution manifolds 712a, 712b may have portions which protrude to the side of column 750, and one or both jumpers 714c may be formed between the protruding portions of the fuel distribution manifolds 712a, 712b on a side or opposing sides of column 750.

In another embodiment, at least one jumper 714d may be formed to connect the exposed edges of the electrically conductive fuel distribution manifolds 712a, 712b in the front and/or back of column 750. Various embodiments may implement combinations of least one jumper 714c and at least one jumper 714d.

While the jumper configurations in FIGs. 7A and 7B illustrate are shown as bypassing one and two fuel cell stacks, respectively, it will be understood by those of ordinary skill in the art that any such jumpers may be implemented to bypass one or multiple adjacent fuel cell stacks based on the particular configuration of the column. Further, the use of terms such as "top" and "bottom" in describing the embodiments in FIGs. 7A and 7B should be considered directional with respect to the orientation of the fuel cell stack column, as opposed to absolute direction. For example, as applied to a horizontal fuel cell stack column, the terms "top" and "bottom" may be considered as being equivalent to the absolute directions of "left" and "right" (or vice versa).

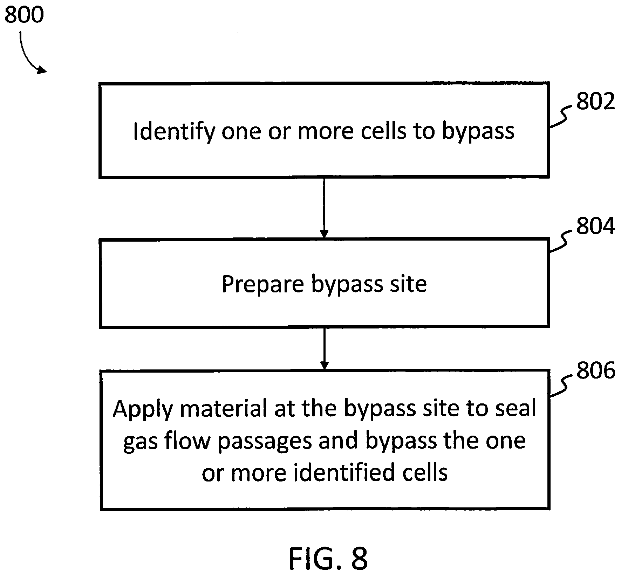

FIG. 8 illustrates an embodiment method 800 for sealing gas flow passages 208 and bypassing a fuel cell with the same structure. One or more fuel cells in the fuel cell stack may be identified to be bypassed in step 802. For example, a fuel cell that had failed or was underperforming (e.g., the fuel cell was not producing enough voltage, had cracked, or was not meeting any other standard) or was suspected of failing or underperforming could be identified to be bypassed. Fuel cells and fuel cell stacks may be monitored with a variety of sensor devices, such as voltage, current or pressure probes, to determine if a fuel cell was failing or underperformed.

A site for applying a conductive sealing material to form an additional sealing jumper 602 may be prepared in step 804. This step may be optional if the fuel cell stack does not need preparation. If the fuel cell stack does need preparation, a jumper connection site may be prepared, such as by removing material from the side of the stack. For example, platinum, nickel, Inconel, or lanthanum strontium manganite (LSM) may be removed from the side of the fuel cell stack.

In step 806, a conductive sealing material may be applied to the fuel cell stack such that the conductive sealing material seals a cathode inlet or outlet of the identified fuel cell and such that the conductive sealing material electrically bypasses the identified fuel cell. The conductive sealing material may form a sealing jumper 602. Application of conductive sealing material may be performed various ways. For example, the conductive sealing material may be plasma sprayed on the fuel cell stack to connect a first interconnect and a second interconnect of the fuel cell stack.

The conductive sealing material may include various materials. For example, the conductive sealing material may include a metal alloy, an electrically conductive glass, or a composite metal mixture. In further embodiments, the conductive sealing material may include lanthanum-strontium-manganate, manganese-cobalt mixtures, or alumina paste compositions.

The conductive sealing material may be selected to match the coefficient of thermal expansion of other portions of the fuel cell stack to prevent uneven expansion and breakage during operation. The conductive sealing material may also be selected based on conductivity, glass transition temperature, and/or various mechanical properties to provide structural support and stability when applied to a fuel cell stack. In alternate embodiments, anode inlets and/or outlets may be sealed, or both anode and cathode inlets and/or outlets may be sealed in step 806.

Fuel cells 1 are electrically bypassed by one or more jumpers 202 and optionally additional conductive sealing material applied as a sealing jumper 602. These conductive bypass mechanisms may electrically bypass one or more fuel cells without need for a diode or other electrical component.

## Claims

1. A method for bypassing a fuel cell (1) in a solid oxide fuel cell stack (200/ 250/ 400/ 600/ 702a, 702b, 702c, 702d, 702e, 702f), comprising:
identifying a defective fuel cell to bypass; wherein
the method is **characterized by**
welding on a side of the stack a conductive jumper (202/ 254/ 602) to the fuel cell stack such that the jumper electrically connects a first interconnect (9a/ 9c/ 9g) in the fuel cell stack and a second interconnect (9b/ 9d/ 9h) in the fuel cell stack and electrically bypasses the identified defective fuel cell (1), wherein the jumper comprises a strip of metal that electrically connects the first and second interconnects and does not comprise a diode.

2. The method of claim 1, further comprising preparing a jumper connection site; and
wherein preparing a jumper connection site comprises using a gas laser to remove a perovskite coating from the first (9a/ 9c/ 9g) and second (9b/ 9d/ 9h) interconnect.

3. The method of claim 1, wherein welding the jumper (202/ 254/ 602) comprises one of:
spot welding a jumper to the first interconnect (9a/ 9c/ 9g) and the second (9b/ 9d/ 9h) interconnect of the fuel cell stack; and
laser welding the jumper to the first interconnect and the second interconnect of the fuel cell stack.

4. The method of claim 1, wherein the jumper (202/ 254/ 602) is configured to electrically bypass multiple fuel cells.

5. The method of claim 1, further comprising at least one of:
sealing a cathode inlet or outlet of the identified fuel cell with a sealing material; and
sealing an anode inlet or outlet of the identified fuel cell with the sealing material.

6. The method of claim 5, further comprising removing excess sealing material, wherein the sealing material comprises lanthanum-strontium-manganate, manganese-cobalt mixture, or alumina paste compositions.

7. A solid oxide fuel cell stack device (200/ 250/ 400/ 600/ 702a, 702b, 702c, 702d, 702e, 702f) comprising:
a plurality of fuel cells and a plurality of interconnects (9), wherein:
at least one of the plurality of fuel cells comprises a defective fuel cell (1) located between a first interconnect (9a/ 9c/ 9g) and a second interconnect; and wherein
the solid oxide fuel cell stack is **characterized by**
a jumper (202/ 254/ 602) welded on a side of the stack and to the first (9a/ 9c/ 9g) and the second interconnects (9b/ 9d/ 9h) disposed on opposing sides of the defective fuel cell, such that the jumper electrically connects the first interconnect and the second interconnect and electrically bypasses the defective fuel cell, wherein,
no jumpers are connected to the stack between each two adjacent interconnects of the plurality of the interconnects that are separated by a non-defective fuel cell of the plurality of the fuel cells, and
the jumper comprises a strip of metal that electrically connects the first and second interconnects and does not comprise a diode.

8. The device of claim 7, wherein further comprising a conductive sealing material (418) that seals an inlet or outlet of a cathode or anode of the defective fuel cell while electrically connecting the first (9a/ 9c/ 9g) and the second (9b/ 9d/ 9h) interconnects.

## Patentansprüche

1. Verfahren zum Überbrücken einer Brennstoffzelle (1) in einem Festoxidbrennstoffzellenstapel (200/ 250/ 400/ 600/ 702a, 702b, 702c, 702d, 702e, 702f) umfassend:
Identifizieren einer defekten, zu überbrückenden Brennstoffzelle; wobei
das Verfahren **dadurch gekennzeichnet ist, dass**
eine leitfähige Brücke (202/ 254/ 602) an den Brennstoffzellenstapel an einer Seite des Stapels angeschweißt wird, derart dass die Brücke eine erste Verbindung (9a/ 9c/ 9g) in dem Brennstoffzellenstapel und eine zweite Verbindung (9b/ 9d/ 9h) in dem Brennstoffzellenstapel elektrisch verbindet und die identifizierte, zu überbrückende Brennstoffzelle (1), elektrisch überbrückt, wobei die Brücke einen Metallstreifen umfasst, der die erste und zweite Verbindung elektrisch verbindet und keine Diode umfasst.

2. Das Verfahren nach Anspruch 1, weiter umfassend das Herstellen einer Brückenverbindungstelle; und
wobei das Herstellen einer Brückenverbindungstelle die Verwendung eines Gaslasers umfasst, um eine Perovskit-Beschichtung von der ersten (9a/ 9c/ 9g) und zweiten (9b/ 9d/ 9h) Verbindung zu entfernen.

3. Das Verfahren nach Anspruch 1, wobei das Schweißen der Brücke (202/ 254/ 602) eines umfasst von:
Punktschweißen einer Brücke an die erste Verbindung (9a/ 9c/ 9g) und die zweite (9b/ 9d/ 9h) Verbindung des Brennstoffzellenstapels; und
Laserschweißen der Brücke an die erste Verbindung und die zweite Verbindung des Brennstoffzellenstapels.

4. Das Verfahren nach Anspruch 1, wobei die Brücke (202/ 254/ 602) derart konfiguriert ist, dass sie eine Vielzahl an Brennstoffzellen elektrisch überbrückt.

5. Das Verfahren nach Anspruch 1, weiter umfassend mindestens eines von:
Abdichten eines Kathodeneinlasses oder -auslasses der identifizierten Brennstoffzelle mit einem Abdichtmaterial; und
Abdichten eines Anodeneinlasses oder -auslasses der identifizierten Brennstoffzelle mit dem Abdichtmaterial.

6. Verfahren nach Anspruch 5, weiter umfassend das Entfernen eines Überschusses an Abdichtmaterial, wobei das Abdichtmaterial Lanthan-Strontium-Manganat, Mangan-Kobalt-Mischung, oder Aluminium-Pasten-Zusammensetzungen umfasst.

7. Festoxidbrennstoffzellenstapel-Vorrichtung (200/ 250/ 400/ 600/ 702a, 702b, 702c, 702d, 702e, 702f), umfassend:
eine Vielzahl an Brennstoffzellen und eine Vielzahl an Verbindungen (9), wobei:
mindestens eine der Vielzahl an Brennstoffzellen eine defekte Brennstoffzelle (1) umfasst, die zwischen einer ersten Verbindung (9a/ 9c/ 9g) und einer zweiten Verbindung angeordnet ist; und wobei
der Festoxidbrennstoffzellenstapel **gekennzeichnet ist durch** eine Brücke (202/ 254/ 602), die an einer Seite des Stapels und an die erste (9a/ 9c/ 9g) und die zweite Verbindung (9b/ 9d/ 9h), die an gegenüberliegenden Seiten der defekten Brennstoffzelle angeordnet sind, angeschweißt ist, derart dass die Brücke die erste Verbindung und die zweite Verbindung elektrisch verbindet und die defekte Brennstoffzelle elektrisch überbrückt, wobei
keine Brücke mit dem Stapel zwischen jeweils zwei benachbarten Verbindungen der Vielzahl an Verbindungen, die durch eine nicht-defekte Brennstoffzelle der Vielzahl an Brennstoffzellen getrennt sind, verbunden ist, und
die Brücke einen Metallstreifen umfasst, der die erste und zweite Verbindungen elektrisch verbindet und keine Diode umfasst.

8. Die Vorrichtung nach Anspruch 7, die weiter ein leitfähiges Abdichtmaterial (418) umfasst, welches einen Einlass oder Auslass einer Kathode oder Anode der defekten Brennstoffzelle abdichtet, während die erste (9a/ 9c/ 9g) und die zweite (9b/ 9d/ 9h) Verbindungen elektrisch verbunden werden.

## Revendications

1. Procédé pour contourner une pile à combustible (1) dans un empilement de piles à combustible à oxyde solide (200/250/400/600/702a, 702b, 702c, 702d, 702e, 702f), comprenant :
l'identification d'une pile à combustible défectueuse à contourner ; dans lequel
le procédé est **caractérisé par**
le soudage sur un côté de l'empilement d'un cavalier conducteur (202/254/602) à l'empilement de piles à combustible de telle sorte que le cavalier connecte électriquement une première interconnexion (9a/9c/9g) dans l'empilement de piles à combustible et une seconde interconnexion (9b/9d/9h) dans l'empilement de piles à combustible et contourne électriquement la pile à combustible défectueuse identifiée (1), dans lequel le cavalier comprend une bande de métal qui connecte électriquement les première et seconde interconnexions et ne comprend pas de diode.

2. Procédé selon la revendication 1, comprenant en outre la préparation d'un site de connexion par cavalier ; et
dans lequel la préparation d'un site de connexion par cavalier comprend l'utilisation d'un laser à gaz pour enlever un revêtement de pérovskite des première (9a/9c/9g) et seconde (9b/9d/9h) interconnexions.

3. Procédé selon la revendication 1, dans lequel le soudage du cavalier (202/254/602) comprend un soudage parmi :
le soudage par points d'un cavalier à la première interconnexion (9a/9c/9g) et à la seconde interconnexion (9b/9d/9h) de l'empilement de piles à combustible ; et
le soudage au laser du cavalier à la première interconnexion et à la seconde interconnexion de l'empilement de piles à combustible.

4. Procédé selon la revendication 1, dans lequel le cavalier (202/254/602) est conçu pour contourner électriquement plusieurs piles à combustible.

5. Procédé selon la revendication 1, comprenant en outre au moins un élément parmi :
le scellage d'une entrée ou d'une sortie de cathode de la pile à combustible identifiée avec un matériau d'étanchéité ; et
le scellage d'une entrée ou d'une sortie d'anode de la pile à combustible identifiée avec le matériau d'étanchéité.

6. Procédé selon la revendication 5, comprenant en outre l'élimination du matériau d'étanchéité en excès, dans lequel le matériau d'étanchéité comprend un mélange de lanthane-strontium-manganate, de manganèse-cobalt ou des compositions de pâte d'alumine.

7. Dispositif d'empilement de piles à combustible à oxyde solide (200/250/400/600/702a, 702b, 702c, 702d, 702e, 702f) comprenant :
une pluralité de piles à combustible et une pluralité d'interconnexions (9), dans lequel :
au moins une parmi la pluralité de piles à combustible comprend une pile à combustible défectueuse (1) située entre une première interconnexion (9a/9c/9g) et une seconde interconnexion ; et dans lequel
l'empilement de piles à combustible à oxyde solide est **caractérisée par**
un cavalier (202/254/602) soudé sur un côté de l'empilement et aux première (9a/9c/9g) et seconde (9b/9d/9h) interconnexions disposées sur des côtés opposés de la pile à combustible défectueuse, de telle sorte que le cavalier connecte électriquement la première interconnexion et la seconde interconnexion et contourne électriquement la pile à combustible défectueuse, dans lequel
aucun cavalier n'est connecté à l'empilement entre chacune de deux interconnexions adjacentes de la pluralité d'interconnexions qui sont séparées par une pile à combustible non défectueuse de la pluralité de piles à combustible, et
le cavalier comprend une bande de métal qui connecte électriquement les première et seconde interconnexions et ne comporte pas de diode.

8. Dispositif selon la revendication 7, dans lequel il comprend en outre un matériau d'étanchéité conducteur (418) qui scelle l'entrée ou la sortie d'une cathode ou d'une anode de la pile à combustible défectueuse tout en connectant électriquement les première (9a/9c/9g) et seconde (9b/9d/9h) interconnexions.
